# EUROPÄISCHE PATENTSCHRIFT

(11) **EP 1 706 592 B1**
(45) Veröffentlichungstag und Bekanntmachung des Hinweises auf die Patenterteilung: **09.03.2011**
(21) Anmeldenummer: 05700848.4
(22) Anmeldetag: 12.01.2005
(51) Int. Cl.: F01D 5/22, F01D 11/00

(54) **TURBINENSCHAUFEL UND GASTURBINE MIT EINER SOLCHEN TURBINENSCHAUFEL**
TURBINE BLADE AND GAS TURBINE EQUIPPED WITH A TURBINE BLADE OF THIS TYPE
AUBE DE TURBINE ET TURBINE A GAZ POURVUE DE CETTE AUBE DE TURBINE

(30) Priorität: 20.01.2004 EP 04001108
(43) Veröffentlichungstag der Anmeldung: 04.10.2006
(73) Patentinhaber: SIEMENS AKTIENGESELLSCHAFT, 80333 München (DE)
(72) Erfinder: BALDAUF, Stefan, 80999 München (DE); BOLMS, Hans-Thomas, 45481 Mülheim (DE); HÄNDLER, Michael, 40699 Erkrath (DE); LERNER, Christian, 45701 Herten (DE)
(86) Internationale Anmeldenummer: PCT/EP2005/000226
(87) Internationale Veröffentlichungsnummer: WO 2005/068786

(56) Entgegenhaltungen:
- EP-A- 1 073 827
- WO-A-99/60253
- US-A- 5 244 345

## Beschreibung

Die Erfindung betrifft eine Turbinenschaufel mit einem entlang einer Schaufelachse angeordneten Schaufelblatt und mit einem Plattformbereich, der am Fuße des Schaufelblattes angeordnet eine Plattform aufweist, die sich quer zur Schaufelachse erstreckt, wobei die Plattform eine erste, das Schaufelblatt nicht-tragende Plattformwand und eine zweite, das Schaufelblatt tragende Plattformwand aufweist. Die Erfindung führt auch auf eine Gasturbine mit einem sich entlang einer Achse der Gasturbine erstreckenden Strömungskanal mit ringförmigem Querschnitt für ein Arbeitsmedium, einer zweiten hinter einer ersten entlang der Achse angeordneten Schaufelstufe, wobei eine Schaufelstufe eine Anzahl von ringförmig angeordneten, sich radial in den Strömungskanal erstreckende Turbinenschaufeln aufweist.

Bei einer Gasturbine dieser Art treten im Strömungskanal nach Beaufschlagung mit Heißgas Temperaturen auf, die im Bereich zwischen 1000 °C und 1400 °C liegen können. Die Plattform der Turbinenschaufel bildet infolge der ringförmigen Anordnung einer Anzahl solcher Turbinenschaufeln einer Schaufelstufe einen Teil des Strömungskanals für ein die Gasturbine durchströmendes Arbeitsfluid in Form von Heißgas, das auf diese Weise den axialen Turbinenrotor über die Turbinenschaufeln antreibt. Einer derart starken thermischen Beanspruchung der durch die Plattformen gebildeten Begrenzung des Strömungskanals wird dadurch begegnet, dass eine Plattform von hinten, also vom unterhalb der Plattform angeordneten Fuß einer Turbinenschaufel her, gekühlt wird. Dazu weist der Fuß und der Plattformbereich üblicherweise eine geeignete Kanalisation zur Beaufschlagung mit einem Kühlmedium auf.

Aus der DE 2 628 807 A1 geht ein Prallkühlsystem für eine Turbinenschaufel eingangs genannter Art hervor.

In der DE 2 628 807 A1 ist zur Kühlung der Plattform vor der dem Heißgas abgewandten Seite der Plattform, also hinter der Plattform, d. h. zwischen einem Schaufelfuß und der Plattform, ein gelochtes Wandelement angeordnet. Durch die Löcher des Wandelements trifft Kühlluft unter relativ hohem Druck auf die vom Heißgas abgewandte Seite der Plattform, wodurch eine effiziente Prallkühlung erreicht wird.

In der EP 1 073 827 B1 wird eine neuer Weg in der Konstruktion des Plattformbereichs gegossener Turbinenschaufeln offenbart. Der Plattformbereich ist als Doppelplattform aus zwei einander gegenüberliegenden Plattformwänden ausgebildet. Dadurch wird erreicht, dass die dem Strömungskanal und damit dem Heißgas unmittelbar ausgesetzte, den Strömungskanal begrenzende Plattformwand dünn ausgeführt werden kann. Mit der Ausführung in zwei Plattformwänden ergibt sich eine Funktionstrennung für die Plattformwände. Die den Strömungskanal begrenzende Plattformwand ist im Wesentlichen für die Kanalisation des Heißgases verantwortlich. Die gegenüberliegende, vom Heißgas nicht beaufschlagte Plattformwand übernimmt die Aufnahme der vom Schaufelblatt herrührenden Lasten. Diese Funktionstrennung ermöglicht es, die den Strömungskanal begrenzende Plattformwand so dünn auszuführen, dass die Heißgaskanalisierung gewährleistet ist, ohne dabei wesentliche Lasten abfangen zu müssen.

Üblicherweise ist im Plattformbereich und im Fußbereich des Schaufelblattes, zwischen Schaufelblatt und Plattform, aufgrund von Randbedingungen, die letztendlich durch die Gussherstellung und durch die Festigkeitsanforderungen infolge einer Beanspruchung einer Turbinenschaufel gegeben sind, die bei üblichen Turbinenschaufeln vorgesehene relativ hohe Materialansammlung vorgegeben. Solch eine relativ hohe Materialsammlung erschwert zugleich auch den Wärmeabfluss aus diesem Bereich durch im Schaufelinneren installierte Kühlmethoden und verhindert auch die direkte Kühlung dieser Bereiche mit Kühlmedium. Es ist bekannt zur Kühlung dieser Bereiche eine Filmkühlung auf der Außenoberfläche einer Schaufel im Fußbereich des Schaufelblatts und im Plattformbereich vorzusehen. Dazu wird in der Nähe dieser Außenoberflächen aus einem entsprechenden offenen Spaltsystem ein Kühlfilm auf diese Begrenzungen des mit Arbeitsmedium in Form von Heißgas beaufschlagten Strömungskanals gelegt. Grundsätzlich ist dies eine funktionierende Lösung zur Kühlung der oben genannten Plattform- und Fußbereiche mit ihren relativ hohen Materialansammlungen. Dennoch ist dazu aufgrund der komplizierten Sekundärströmungssituation im Strömungskanal eine erhebliche Kühlluftmenge notwendig, wobei Wirbelkonfigurationen der Sekundärströmung zum Abheben und Ablenken des Kühlfilms von den genannten Außenoberflächen führen können. Demzufolge kann diese bekannte Vorgehensweise im Realbetrieb einer Gasturbine in diesen schwer zugänglichen Bereichen zu einem ungekühlten Fußbereich und Plattformbereich führen. Wünschenswert wäre eine vorteilhafte Ausgestaltung dieser Bereiche.

An dieser Stelle setzt die Erfindung an, deren Aufgabe es ist, eine Turbinenschaufel und eine Gasturbine anzugeben, bei der eine verbesserte Kühlung im Fußbereich des Schaufelblattes und Plattformbereich einer Turbinenschaufel und damit eine verbesserte Kühlung der Begrenzung eines Strömungskanals der Gasturbine bereitgestellt ist.

Die Aufgabe wird hinsichtlich der Turbinenschaufel gelöst durch eine Turbinenschaufel der eingangs genannten Art, bei der am Fuße des Schaufelblattes im Verlaufe eines Übergangs vom Schaufelblatt zur Plattform, die erste Plattformwand in ihrem Verlauf eine aerodynamische Verrundung aufweist und die zweite Plattformwand in ihrem Verlauf gegenüber der ersten Plattformwand und in Fortsetzung des Schaufelblatts eine zurückspringende Stufe aufweist.

Die Erfindung geht von der Überlegung aus, dass die Verwendung, einer dünnwandigen, nicht-tragenden Plattformwand zur Darstellung der Begrenzung eines Strömungskanals, der in einem Betriebszustand einer Gasturbine mit einem Arbeitsmedium in Form von Heißgas beaufschlagt wird, eine besonders vorteilhafte Ausgestaltung der Plattform erlaubt. Die wesentliche Erkenntnis der Erfindung liegt darin, dass für eine solche doppelwandige Plattform mit einer ersten dünnwandigen nicht-tragenden Plattformwand und einer zweiten dickerwandigen, tragenden Plattformwand sowohl die nicht-tragende als auch die tragende Plattformwand hinsichtlich ihrer Anforderungen optimiert werden können.

Gemäß obiger Überlegung ist die nicht-tragende Plattformwand insbesondere hinsichtlich ihrer Begrenzungsfunktion zum Strömungskanal auszugestalten. Gemäß der Erfindung weist diese im Verlaufe des Übergangs vom Schaufelblatt zur Plattform den Verlauf einer aerodynamischen Verrundung auf. Gemäß obiger Überlegung ist die Rückseite der Plattform, also die zweite tragende Plattformwand, insbesondere hinsichtlich ihrer tragenden Funktion auszugestalten. Sie sollte einen Zwischenraum zur Kühlung der nicht-tragenden Plattformwand zur Verfügung stellen. Aus diesem Grund sieht die Erfindung vor, dass die zweite Plattformwand in ihrem Verlauf gegenüber der ersten Plattformwand und in Fortsetzung des Schaufelblatts eine zurückspringende Stufe aufweist. Demzufolge bleibt gemäß dem vorliegenden Konzept die Rückseite der ersten nicht-tragenden Plattformwand frei und die tragende Schaufelstruktur in Form der zweiten tragenden Plattformwand wird nach thermomechanischen Gesichtspunkten gestaltoptimiert, d. h. zum einen stellt die zweite Plattformwand die Fortsetzung einer Schaufelblattwand, praktisch mit gleichbleibender Dicke der Schaufelblattwand, dar, und zum anderen stellt die zweite Plattformwand aufgrund der zurückspringenden Stufe einen ausreichenden Zwischenraum zur Verfügung, der mit Kühlmedium für die nicht-tragende Plattformwand beaufschlagt werden kann.

Die thermische Beanspruchung der nicht-tragenden ersten Plattformwand ist durch den Verlauf einer aerodynamischen Verrundung reduziert, was auch die Kühlungsmaßnahmen reduziert. Die Kühlungsmaßnahmen selbst sind insbesondere durch die Gestaltung der tragenden zweiten Plattformwand und des genannten Zwischenraums optimiert, so dass der auch als Korbbogen bezeichnete Bereich zwischen Fußbereich des Schaufelblattes und Plattformbereich mit geringem Aufwand optimiert gekühlt werden kann.

Die wesentliche Erkenntnis der Erfindung liegt also darin, dass mit der vorgeschlagenen Ausgestaltung eines Übergangs zwischen dem Schaufelblatt und der Plattform einerseits Materialansammlungen weitestgehend reduziert sind ohne die mechanische Stabilität einer Turbinenschaufel zu gefährden, und andererseits in diesem Übergang eine möglichst effektive Kühlung integriert ist.

Vorteilhafte Weiterbildungen der Erfindung sind den Unteransprüchen zu entnehmen und geben im Einzelnen vorteilhafte Möglichkeiten an, die Plattform obiger Turbinenschaufel im Rahmen des erläuterten Konzepts auszugestalten.

Gemäß einer besonders bevorzugten Weiterbildung der Erfindung ist gemäß der erläuterten Vorgehensweise zwischen der Verrundung der ersten Plattformwand und der Stufe der zweiten Plattformwand ein Zwischenraum zur Kühlung der Plattform gebildet. Dazu kann der Zwischenraum vor allem zum Zwecke einer Prallkühlung der ersten Plattformwand geeignet gewählt werden.

Zweckmäßigerweise weist der Zwischenraum eine entlang dem gesamten Verlauf der Plattform im Wesentlichen durch eine Höhe der Stufe definierte, gleichbleibende Höhe auf. Dies hat den Vorteil, dass zum einen im Zwischenraum eine optimale Führung des Kühlmediums aus fluidtechnischen Gesichtspunkten möglich ist. Zum anderen wird die Höhe derart gewählt, dass durch Einleiten eines Kühlmediums in den Zwischenraum durch die zweite tragende Plattformwand eine optimale Prallkühlung der ersten nicht-tragenden Plattformwand ermöglicht wird.

Aufgrund unterschiedlicher Anforderungen weist die zweite Plattformwand eine Wandstärke auf, die größer als eine Wandstärke der ersten Plattformwand ist. Vorzugsweise ist die zweite tragende Plattformwand mit einer Wandstärke ausgebildet, die im Wesentlichen der Wandstärke am Fußbereich des Schaufelblattes entspricht.

Zur optimierten Kühlung des Übergangs am Fuße des Schaufelblattes ist die Anzahl der Kühldurchgänge pro Fläche im Verlaufe des Übergangs höher als im übrigen Plattformbereich. Auf diese Weise wird die gesamte rückseitige Fläche der nicht-tragenden Plattformwand, die eine direkte Begrenzung zum heißgasbeaufschlagten Strömungskanal bildet, optimierten Kühlungsmaßnahmen zugänglich.

Gemäß einer besonders bevorzugten Weiterbildung der Erfindung ist die erste nicht-tragende Plattformwand durch ein am Schaufelblatt anliegendes federelastisches Blechteil gebildet. Das Blechteil liegt dabei vorzugsweise an einem Anschlag am Fuße des Schaufelblattes an, der nut- oder kantenförmig ausgebildet sein kann. Die nicht-tragende Plattformwand ist also derart dünnwandig ausgebildet, dass sie durch eine Relativbewegung benachbarter Teile infolge ihrer Flexibilität aufgrund des federelastischen Blechteils in ihrer Wirkung als Begrenzung zum Strömungskanal nicht beeinträchtigt ist. Aufgrund ihrer federelastischen Ausbildung ist ein besonders vorteilhaft gestalteter Verlauf in Form einer aerodynamischen Verrundung möglich.

Zweckmäßigerweise ist die Plattform in einer ersten Hälfte auf der einen Seite des Schaufelblattes und in einer zweiten Hälfte auf der anderen Seite des Schaufelblattes qualitativ gleich ausgebildet. Die Plattform erstreckt sich also auf beiden Seiten des Schaufelblatts in qualitativ gleicher Form. Sie weist also auf der einen und anderen Seite die gleichen obigen Merkmale auf. Auf diese Weise lässt sich durch eine Aneinanderreihung von einer Anzahl von Turbinenschaufeln in einer Schaufelstufe besonders vorteilhaft eine Begrenzung des Strömungskanals im Sinne der obigen Aufgabenstellung bilden.

Die Erfindung führt auch auf eine Gasturbine der eingangs genannten Art, bei der eine Schaufelstufe eine Anzahl von ringförmig angeordneten, sich radial in den Strömungskanal erstreckende Turbinenschaufeln aufweist, die wie oben erläutert ausgebildet sind.

Zweckmäßigerweise muss eine nicht-tragende erste Plattformwand nicht in jedem Fall im Plattformbereich angefügt sein, sondern es reicht eine lösbare oder lose Anlage an einem Ansatz im Fußbereich des Turbinenschaufelblattes oder im Bereich der tragenden zweiten Plattformwand.

Bei rotatorischem Betrieb einer Turbinenschaufel in Form einer Laufschaufel an einem axialen Turbinenrotor wird nämlich eine durch die Rotation vom Fuße des Schaufelblattes her in Richtung des Schaufelblatts wirkende Fliehkraft erzeugt. Das heißt das federelastische Blechteil wird bei Betrieb durch die Fliehkraft gegen den Anschlag gedrückt und dadurch fliehkraftbefestigt.

Des Weiteren wird bei Betrieb einer Turbinenschaufel in Form einer Leitschaufel an einem peripheren Turbinengehäuse, durch ein Kühlmedium ein Druckgefälle vom Fuße des Schaufelblattes her in Richtung des Schaufelblattes erzeugt. Das heißt, das federelastische Blechteil wird bei Betrieb durch das Druckgefälle gegen den Anschlag gedrückt und dadurch am Anschlag druckbefestigt.

Im Rahmen einer Ausgestaltung der Gasturbine erweist es sich als vorteilhaft, dass zwischen einer ersten Turbinenschaufel und einer benachbarten zweiten Turbinenschaufel der gleichen Schaufelstufe von einem ersten federelastischen Blechteil der ersten Turbinenschaufel und von einem zweiten federelastischen Blechteil der zweiten Turbinenschaufel eine Begrenzung des Strömungskanals gebildet ist. Innerhalb einer Schaufelstufe wird auf diese Weise vorteilhaft eine radiale Begrenzung des Strömungskanals gebildet.

Im Rahmen einer weiteren Ausgestaltung der Gasturbine erweist es sich darüber hinaus als vorteilhaft, dass zwischen einer ersten Turbinenschaufel einer ersten Schaufelstufe und einer axial direkt hinter der ersten Turbinenschaufel angeordneten zweiten Turbinenschaufel einer zweiten Schaufelstufe von einem ersten federelastischen Blechteil der ersten Turbinenschaufel und einem zweiten federelastischen Blechteil der zweiten Turbinenschaufel eine Begrenzung des Strömungskanals gebildet ist. Auf diese Weise wird vorteilhaft eine axiale Begrenzung des Strömungskanals gebildet. Bei den Schaufelstufen handelt es sich vorteilhaft um Leitschaufelstufen und bei den Turbinenschaufeln um Leitschaufeln.

Diese Art einer Befestigung einer nicht-tragenden zweiten Plattformwand hat erhebliche Vorteile bei der Montage und Fertigung einer Turbinenschaufel und einer Bestückung einer Gasturbine mit einer solchen Turbinenschaufel.

Ausführungsbeispiele der Erfindung werden nachfolgend anhand der Zeichnung beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verweisen.

Im Einzelnen zeigt die Zeichnung in:
- FIG 1: eine besonders bevorzugte Ausführungsform einer Gas- turbine mit einem Strömungskanal und einer bevorzug- ten Ausführung der Leit- und Laufbeschaufelung in schematisierter Form in einer Querschnittsansicht,
- FIG 2: einen Plattformbereich einer besonders bevorzugten Ausführungsform einer ersten Turbinenschaufel einer ersten Schaufelstufe und einer axial direkt hinter der ersten Turbinenschaufel angeordneten zweiten Tur- binenschaufel der zweiten Schaufelstufe in perspekti- vischer Ansicht.

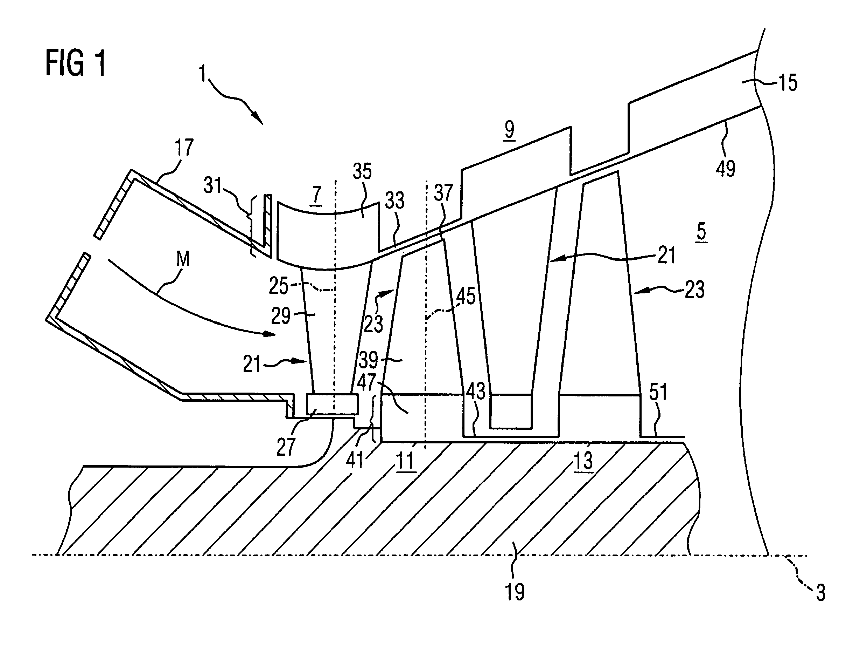

FIG 1 zeigt eine Gasturbine 1 mit einem sich entlang einer Achse 3 sich erstreckenden Strömungskanal 5 mit ringförmigem Querschnitt für ein Arbeitsmedium M. In dem Strömungskanal 5 ist eine Anzahl von Schaufelstufen angeordnet. Insbesondere ist eine zweite Leitschaufelstufe 9 hinter einer ersten Leitschaufelstufe 7 entlang der Achse 3 angeordnet. Des Weiteren ist eine zweite Laufschaufelstufe 13 hinter einer ersten Laufschaufelstufe 11 angeordnet. Die Leitschaufelstufen 7, 9 weisen dabei eine Anzahl von ringförmig an einem peripheren Turbinengehäuse 15 angeordneten, sich radial in den Strömungskanal 5 erstreckende Leitschaufeln 21 auf. Eine Laufschaufelstufe 11, 13 weist dabei eine Anzahl von ringförmig an einem axialen Turbinenrotor 19 angeordneten, sich radial in den Strömungskanal 5 erstreckende Laufschaufeln 23 auf. Die Strömung eines Arbeitsmediums M wird dabei in Form eines Heißgases von einem Brenner 17 erzeugt. Entsprechend dem ringförmigen Querschnitt des Strömungskanals 5 ist eine Anzahl solcher Brenner 17 in einem in der Querschnittzeichnung der FIG 1 nicht gezeigten Ringraum um die Achse 3 herum angeordnet.

Eine Leitschaufel 21 und eine Laufschaufel 23 sind in der FIG 1 schematisch gezeigt. Eine Leitschaufel 21 weist eine entlang einer Schaufelachse 25 angeordnete Schaufelspitze 27, ein Schaufelblatt 29 und einen Plattformbereich 31 auf. Der Plattformbereich 31 weist sich quer zur Schaufelachse 25 erstreckende Plattform 33 und einen Schaufelfuß 35 auf.

Eine Laufschaufel 23 weist eine entlang einer Schaufelachse angeordnete Schaufelspitze 37, ein Schaufelblatt 39 und einen Plattformbereich 41 auf. Der Plattformbereich 41 weist eine sich quer zur Schaufelachse 45 erstreckende Plattform 43 und einen Schaufelfuß 47 auf.

Die Plattform 33 einer Leitschaufel 21 und die Plattform 43 einer Laufschaufel 23 bilden dabei jeweils einen Teil einer Begrenzung 49, 51 des Strömungskanals 5 für das Arbeitsmedium M, welches die Gasturbine 1 durchströmt. Die periphere Begrenzung 49 ist dabei Teil des peripheren Turbinengehäuses 15. Die rotorseitige Begrenzung 51 ist dabei Teil des im Betriebszustand der Gasturbine 1 sich drehenden Turbinenrotors 19.

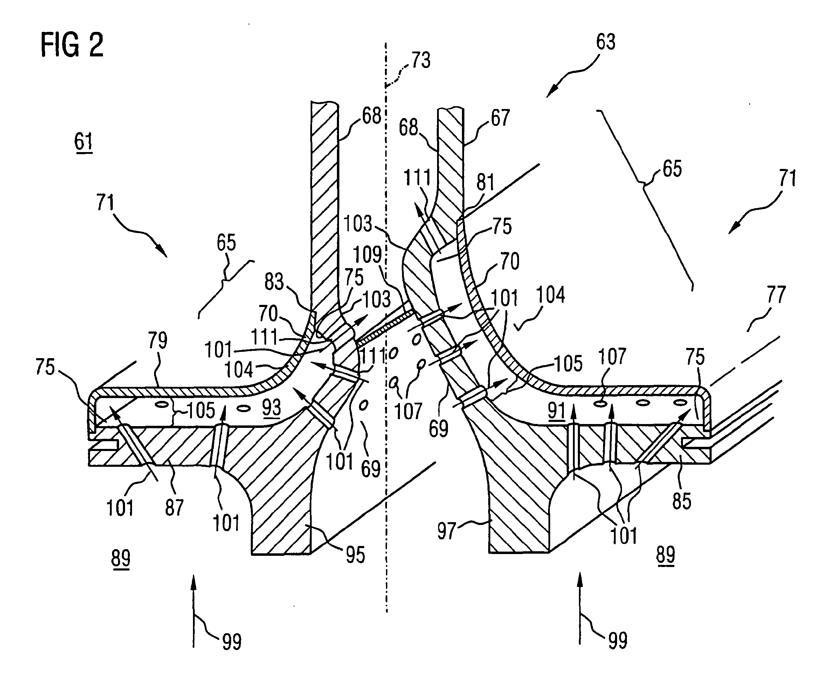

Wie in der FIG 1 schematisch angedeutet und in der FIG 2 im Detail gezeigt, ist dabei die Plattform 33 einer Leitschaufel 21 und die Plattform 43 einer Laufschaufel 23 durch ein am Schaufelblatt 29, 39 anliegendes federelastisches Blechteil gebildet.

Die FIG 2 zeigt stellvertretend für einen Plattformbereich 31, 41 einen Plattformbereich 61. Die in FIG 2 gezeigte Turbinenschaufel 63 ist dabei stellvertretend für eine Leitschaufel 21 einer ersten Leitschaufelstufe 7 oder einer zweiten Leitschaufelstufe 9 gezeigt. Die Turbinenschaufel 63 ist auch stellvertretend für eine in der FIG 1 gezeigte Laufschaufel 23 einer ersten Laufschaufelstufe 11 oder einer zweiten Laufschaufelstufe 13 gezeigt. Vorzugsweise handelt es sich bei der Turbinenschaufel 63 um eine Leitschaufel.

Die Turbinenschaufel 63 weist ein im Abbruch gezeichnetes Schaufelblatt 67 auf. Im Plattformbereich 61 am Fuße des Schaufelblattes 67 ist eine Plattform 71 gebildet, die sich quer zur Schaufelachse 73 erstreckt. Dabei ist die Plattform 71 zum einen durch eine erste, das Schaufelblatt 67 nicht-tragende Plattformwand 70 und eine zweite, das Schaufelblatt tragende Plattformwand 69 gebildet.

Die erste nicht-tragende Plattformwand 70 ist durch ein erstes federelastisches Blechteil 77 und zum anderen durch ein zweites federelastisches Blechteil 79 gebildet. Das erste federelastische Blechteil 77 liegt an einem ersten Anschlag 81 auf der einen Seite des Schaufelblattes 67 an. Das zweite federelastische Blechteil 79 liegt an einem zweiten Anschlag 83 auf der anderen Seite des Schaufelblattes 67 an. Der erste Anschlag 81 und der zweite Anschlag 83 ist dabei jeweils in Form einer Nut ausgebildet, in welche jeweils das erste federelastische Blechteil 77 und das zweite federelastische Blechteil 79 jeweils mit seiner am Schaufelblatt 67 endenden Kante einstößt. Das erste federelastische Blechteil 77 und das zweite federelastische Blechteil 79 sind darüber hinaus an einem weiteren Anschlag 85, 87 der Turbinenschaufel 63 gehalten. Bei der vorliegenden Ausführungsform ist das erste 77 und das zweite 79 federelastische Blechteil jeweils am Anschlag 85, 87 angefügt. Alternativ oder zusätzlich könnten die federelastischen Blechteile 77, 79 jeweils auch den weiteren Anschlag 85, 87 hintergreifen.

Auf die oben geschilderte Weise ist nämlich zwischen den Turbinenschaufeln 21, 23 einer ersten 7, 11 und einer zweiten 9, 13 Schaufelstufe von federelastischen Blechteilen 77, 79 eine Begrenzung des Strömungskanals 5 gebildet. Auf diese Weise erlaubt die Verwendung einer dünnwandigen, nicht-tragenden Plattform 71 zur Darstellung der Begrenzung des Strömungskanals in Form eines ersten federelastischen Blechteils 77 und eines zweiten federelastischen Blechteils 79 die gleichzeitige Wirkung der federelastischen Blechteile 77, 79 als ein Dichtelement. Ein Dichtelement dieser Art ist gleichzeitig flexibel genug, um Relativbewegungen benachbarter Turbinenschaufeln zu erlauben und hat dennoch eine ausreichende Dichtwirkung. Dadurch wird ein Dichtelement eingespart, wie es bei bisher üblichen Plattformen zur Abdichtung von Teilfugen notwendig gewesen wäre. Potentiell gefährdete, strukturell und thermisch ungünstige Aufnahmekonstruktionen eines solchen Dichtelements werden damit vermieden. Auf der Rückseite 89 der Plattform 71 sind ein erster Kühlraum 91 und ein zweiter Kühlraum 93 in Form eines Zwischenraums gebildet, die es erlauben, die Plattform 71 im Bereich des Fußes der Turbinenschaufel 63 im Verlaufe des Übergangs vom Schaufelblatt 67 zur Plattform 71 optimal zu kühlen. Auf diese Weise kann eine sonst üblicherweise kompliziert auszugestaltende Plattformrandkonstruktion einfacher und ohne thermisch gefährdete Bereich gestaltet werden. Zur Unterstützung der Kühlung in den Kühlräumen 91, 93 ist die vom Fuße des Schaufelblattes 67 ausgehende Tragkonstruktion 95, 97 der Schaufel 63 gestaltoptimiert zum hier nicht gezeigten Schaufelfuß (Bezugszeichen 35, 47 in FIG 1) fortgesetzt, um die Kühlmaßnahmen zu unterstützen.

Je nach Betriebsweise der Turbinenschaufel 63 in Form einer in der FIG 1 gezeigten Leitschaufel 21 oder in Form einer in der FIG 1 gezeigten Laufschaufel 23 ergibt sich die Befestigung des ersten federelastischen Blechteils 77 und des zweiten federelastischen Blechteils 79 an den Anschlägen 81, 83, 85, 87 letztendlich bei Betrieb der Turbinenschaufel 63 in der Gasturbine 1. Bei rotatorischem Betrieb der Turbinenschaufel 63 in Form einer Laufschaufel 23 an einem Turbinenrotor 19 wird nämlich eine durch die Rotation vom Fuße des Schaufelblattes 67 in Richtung 99 des Schaufelblattes 67 wirkende Fliehkraft erzeugt. Hinzu tritt auch ein Druckgefälle wie bei einer Leitschaufel 21.

Bei Betrieb der Turbinenschaufel 63 in Form einer in FIG 1 gezeigten Leitschaufel 21 an einem peripheren Turbinengehäuse 15 wird von der Rückseite 89 einer Plattform 71 her durch ein Kühlmedium ein Druckgefälle vom Fuße des Schaufelblattes 67 in Richtung des Schaufelblattes 67 erzeugt.

Die Richtung 99 sowohl einer oben genannten Fliehkraft für eine Laufschaufel 23 als auch die Richtung 99 des Druckgefälles für eine Leitschaufel 21 ist in FIG 2 durch den Pfeil 99 kenntlich gemacht. Je nach Ausführung der Turbinenschaufel 63 als Laufschaufel 23 oder Leitschaufel 21 wird also die Plattform 71 in Form der federelastischen Blechteile 77, 79 durch die Fliehkraft bzw. durch das Druckgefälle gegen die Anschläge 81, 83 gedrückt. Auf diese Weise sind die federelastischen Blechteile 77, 79 der Plattform 71 fliehkraftbefestigt bzw. druckbefestigt und entfalten gleichzeitig ihre Trennungswirkung zwischen dem heißgasbeaufschlagten Strömungskanal 5 und der kühlmediumbeaufschlagten Rückseite 89 der Plattform 71.

Die tragende zweite Plattformwand 69 der Plattform 71 weist eine gestaltoptimierte Tragstruktur auf und ermöglicht aufgrund ihrer Ausgestaltung eine gut zugängliche und gekühlte Plattform, auch an ihren Rändern 75. Am Fuße des Schaufelblattes 67 wird der Übergang vom Schaufelblatt 67 zur Plattform 71 auch als Korbbogenbereich bezeichnet.

Im Verlaufe dieses Übergangs 65 weist die erste Plattformwand 70 eine aerodynamische Verrundung 104 auf. Die entsprechenden federelastischen Blechteile 77, 79 sind aufgrund ihrer flexiblen Auslegung hinsichtlich ihrer Krümmung im Übergang 65 optimal an die dort herrschenden Bedingungen und Belastungen anpassbar. Insbesondere betrifft diese aerodynamisch angepasste Verrundung 104 nicht nur die heißgasseitige Arbeitsmediumströmung sondern auch die Strömung des Kühlfluids 101 auf der Rückseite 89 der Plattform 71 und in den Kühlräumen 91, 93. Die Wandstärke der ersten Plattformwand 70 ist wesentlich geringer als die der zweiten Plattformwand 69. Die zweite tragende Plattformwand 69 weist in ihrem Verlauf im Übergang 65 gegenüber der ersten Plattformwand 70 und in Fortsetzung einer Schaufelblattwand 68 des Schaufelblatts 67 eine zurückspringende Stufe 103 auf. Dabei bleibt die Wandstärke der Schaufelblattwand 68 im Wesentlichen erhalten. Auf diese Weise werden die Kühlräume 91, 93 zur Kühlung der Plattform 71 als Zwischenräume 69 gebildet. Die Höhe 105 der Kühlräume 91, 93 ist im Wesentlichen durch die Höhe der Stufe 103 definiert.

Im Korbbogenbereich 65 ist eine höhere Anzahl von Kühldurchgängen 107 pro Fläche angeordnet, als im Plattformbereich. Dies führt zu einem optimal gekühlten Korbbogenbereich. Die Voraussetzung dafür ist u. a. die aerodynamisch vorteilhafte Verrundung 104 der ersten nicht-tragenden Plattformwand 70 und der Verlauf der gegenüber der ersten Plattformwand 70 zurückspringenden Stufe in Fortsetzung der Schaufelblattwand 68 in Form der tragenden zweiten Plattformwand 69. Durch die erhöhte Anzahl von Kühldurchgängen 107 im Übergang 65 wird vorteilhaft auch die Materialansammlung im Korbbogenbereich möglichst gering gehalten.

Die Führung des Kühlmediums 101 ist in FIG 2 durch Pfeile angedeutet. Das Kühlmedium 101 wird dabei von der Rückseite 89 der Plattform 71 zunächst in den Plattformbereich 61 und in den Korbbogenbereich 65 geführt, also nicht direkt einer Schaufelblattkühlung zugeführt. Dazu ist ein entsprechender Steg 109 im Inneren des Schaufelblattes 67 zwischen den zweiten Plattformwänden 69, etwa auf Höhe der Stufe 103, angeordnet. Vielmehr wird das zur Kühlung des Korbbogenbereichs 65 verwendete Kühlmedium 101 für eine Kühlung des Schaufelblatts 67 wiederverwendet. Zu diesem Zweck ist im oberen Teil des Korbbogenbereichs 65 zum Fußbereich des Schaufelblatts 67 hin eine weitere Kühlluftöffnung 111 vorgesehen, durch die das Kühlmedium 101 in das Innere des Schaufelblattes 67 einströmt.

Zusammenfassend wird, um eine verbesserte Kühlung eines Plattformbereichs und eines Übergangs 65 von einem Schaufelblatt 67 zu einer Plattform 71 einer Turbinenschaufel 63 und damit die Kühlung einer Begrenzung eines Strömungskanals 5 einer Gasturbine 1 zu gewährleisten, bei einer Turbinenschaufel 67 mit einem entlang einer Schaufelachse 73 angeordneten Schaufelblatt 67 und mit einem Plattformbereich 61, der am Fuße des Schaufelblattes 67 angeordnet, eine Plattform 71 aufweist, die sich quer zur Schaufelachse 73 erstreckt, wobei die Plattform 71 eine erste, das Schaufelblatt 67 nicht-tragende Plattformwand 70 und eine zweite das Schaufelblatt 67 tragende Plattformwand 69 aufweist, wobei gemäß dem vorgeschlagenen Konzept am Fuße des Schaufelblattes 67 im Verlaufe eines Übergangs 65 vom Schaufelblatt 67 zur Plattform 71, die erste Plattformwand 70 in ihrem Verlauf eine aerodynamische Verrundung 104 aufweist und die zweite Plattformwand 69 in ihrem Verlauf eine gegenüber der ersten Plattformwand 70 und in Fortsetzung des Schaufelblatts 67 eine zurückspringende Stufe 103 aufweist.

## Patentansprüche

1. Turbinenschaufel (63) mit einem entlang einer Schaufelachse (73) angeordneten Schaufelblatt (67) und mit einem Plattformbereich (61), der am Fuße des Schaufelblattes angeordnet eine Plattform (71) aufweist, die sich quer zur Schaufelachse (73) erstreckt, wobei die Plattform (71) eine erste das Schaufelblatt nicht-tragende Plattformwand (70) und eine zweite das Schaufelblatt tragende Plattformwand (69) aufweist, wobei
am Fuße des Schaufelblatts (67) im Verlaufe eines Übergangs (65) vom Schaufelblatt (67) zur Plattform (71) die erste Plattformwand (70) in ihrem Verlauf eine aerodynamische Verrundung (104) aufweist und **dadurch gekennzeichnet, dass** die zweite Plattformwand (69) in ihrem Verlauf eine gegenüber der ersten Plattformwand (70) und in Fortsetzung des Schaufelblatts (67) zurückspringende Stufe (103) aufweist.

2. Turbinenschaufel (63) nach Anspruch 1,
**dadurch gekennzeichnet, dass**
zwischen der Verrundung (104) der ersten Plattformwand (70) und der Stufe (103) der zweiten Plattformwand (69) ein Zwischenraum (91, 93) zur Kühlung der Plattform (71) gebildet ist.

3. Turbinenschaufel (63) nach Anspruch 1 oder 2,
**dadurch gekennzeichnet, dass**
der Zwischenraum (91, 93) eine entlang dem gesamten Verlauf der Plattform (71) im Wesentlichen durch eine Höhe der Stufe definierte, gleichbleibende Höhe (105) aufweist.

4. Turbinenschaufel (63) nach einem der Ansprüche 1 bis 3,
**dadurch gekennzeichnet, dass**
die zweite Plattformwand (69) eine Wandstärke aufweist, die größer als eine Wandstärke der ersten Plattformwand (70) ist.

5. Turbinenschaufel (63) nach einem der Ansprüche 1 bis 4,
**dadurch gekennzeichnet, dass**
die zweite Plattformwand (69) Kühldurchgänge (107) aufweist, wobei eine Anzahl der Kühldurchgänge (107) pro Fläche im Verlaufe des Übergangs (65) höher ist als im übrigen Plattformbereich.

6. Turbinenschaufel (63) nach einem der Ansprüche 1 bis 5,
**dadurch gekennzeichnet, dass**
die erste Plattformwand (70) durch ein am Schaufelblatt (67) anliegendes federelastisches Blechteil (77, 79) gebildet ist.

7. Turbinenschaufel (63) nach einem der Ansprüche 1 bis 6,
**dadurch gekennzeichnet, dass**
sich die Plattform (71) auf beiden Seiten des Schaufelblattes (63) qualitativ gleich erstreckt.

8. Gasturbine (1) mit einem sich entlang einer Achse (3) erstreckenden Strömungskanal (5) mit ringförmigem Querschnitt für ein Arbeitsmedium (M), einer zweiten (9, 13) hinter einer ersten (7, 11) entlang der Achse (3) angeordneten Schaufelstufe, wobei eine Schaufelstufe (7, 9, 11, 13) eine Anzahl von ringförmig angeordneten, sich radial in den Strömungskanal (5) erstreckende Turbinenschaufeln (63) nach einem der vorhergehenden Ansprüche aufweist.

9. Gasturbine (1) nach Anspruch 8,
**dadurch gekennzeichnet, dass**
bei rotatorischem Betrieb einer Turbinenschaufel (63) in Form einer Laufschaufel (23) an einem axialen Turbinenrotor, eine durch die Rotation eine vom Fuße des Schaufelblattes her in Richtung (99) des Schaufelblattes wirkende Fliehkraft erzeugt ist,
wobei das federelastische Blechteil (77, 79) durch die Fliehkraft gegen einen Anschlag (81, 85) gedrückt und **dadurch** fliehkraftbefestigt ist.

10. Gasturbine (1) nach Anspruch 8 oder 9,
**dadurch gekennzeichnet, dass**
bei Betrieb einer Turbinenschaufel (63) in Form einer Leitschaufel (21) an einem peripheren Turbinengehäuse (15), durch ein Kühlmedium ein Druckgefälle vom Fuße des Schaufelblattes her in Richtung (99) des Schaufelblattes erzeugt ist, wobei das federelastische Blechteil (77, 79) durch das Druckgefälle gegen einen Anschlag (81, 83) gedrückt ist und **dadurch** druckbefestigt ist.

## Claims

1. Turbine blade (63) with a blade leaf (67) arranged along a blade axis (73) and with a platform region (61) which, arranged at the root of the blade leaf, has a platform (71) extending transversely with respect to the blade axis (73), the platform (71) having a first platform wall (70) not bearing the blade leaf and a second platform wall (69) bearing the blade leaf, at the root of the blade leaf (67), along a transition (65) from the blade leaf (67) to the platform (71), the first platform wall (70) having in its run an aerodynamic rounding (104), and **characterized in that** the second platform wall (69) has in its run, with respect to the first platform wall (70) and in continuation of the blade leaf (67), a set-back step (103).

2. Turbine blade (63) according to Claim 1, **characterized in that** an interspace (91, 93) for cooling the platform (71) is formed between the rounding (104) of the first platform wall (70) and the step (103) of the second platform wall (69).

3. Turbine blade (63) according to Claim 1 or 2, **characterized in that** the interspace (91, 93) has a uniform height (105) defined along the entire run of the platform (71) essentially by a height of the step.

4. Turbine blade (63) according to one of Claims 1 to 3, **characterized in that** the second platform wall (69) has a wall thickness which is greater than a wall thickness of the first platform wall (70).

5. Turbine blade (63) according to one of Claims 1 to 4, **characterized in that** the second platform wall (69) has cooling passages (107), the number of cooling passages (107) per unit area being greater along the transition (65) than in the remaining platform region.

6. Turbine blade (63) according to one of Claims 1 to 5, **characterized in that** the first platform wall (70) is formed by a resilient elastic sheet metal part (77, 79) lying against the blade leaf (67).

7. Turbine blade (63) according to one of Claims 1 to 6, **characterized in that** the platform (71) extends qualitatively identically on both sides of the blade leaf (63).

8. Gas turbine (1) with a flow duct (5) extending along an axis (3) and having an annular cross section for a working medium (M), and with a second blade stage (9, 13) arranged downstream of a first (7, 11) along the axis (3), a blade stage (7, 9, 11, 13) having a number of annularly arranged turbine blades (63) according to one of the preceding claims which extend radially into the flow duct (5).

9. Gas turbine (1) according to Claim 8, **characterized in that**, during the rotary operation of a turbine blade (63) in the form of a moving blade (23) on an axial turbine rotor, a centrifugal force acting from the root of the blade leaf in the direction (99) of the blade leaf is generated as a result of rotation, the resilient elastic sheet metal part (77, 79) being pressed against a stop (81, 85) by the centrifugal force and thereby being fastened by centrifugal force.

10. Gas turbine (1) according to Claim 8 or 9, **characterized in that**, during the operation of a turbine blade (63) in the form of a guide blade (21) on a peripheral turbine casing (15), a pressure drop from the root of the blade leaf in the direction (99) of the blade leaf is generated by a cooling medium, the resilient elastic sheet metal part (77, 79) being pressed against a stop (81, 83) by the pressure drop and thereby being fastened by pressure.

## Revendications

1. Aube ( 63 ) de turbine ayant une lame ( 67 ) d'aube montée le long d'un axe ( 73 ) d'aube et une partie ( 61 ) de plateforme qui a une plateforme disposée à l'emplanture de la lame d'aube et s'étendant transversalement à l'axe ( 73 ) de l'aube, la plateforme ( 71 ) ayant une première paroi ( 70 ) de plateforme ne portant pas la lame de l'aube et une deuxième paroi ( 69 ) de plateforme portant la lame de l'aube, dans laquelle
à l'emplanture de la lame ( 67 ) de l'aube dans le tracé d'un passage ( 65 ) de la lame ( 67 ) de l'aube à la plateforme ( 71 ), la première paroi ( 70 ) de la plateforme a dans son tracé un arrondi ( 104 ) aérodynamique et **caractérisée en ce que** la deuxième paroi ( 69 ) de la plateforme a dans son tracé un gradin ( 103 ) revenant par rapport à la première paroi ( 70 ) de la plateforme et dans le prolongement de la lame ( 67 ) de l'aube.

2. Aube ( 63 ) de turbine suivant la revendication 1, **caractérisée en ce que**
un espace ( 91, 93 ) intermédiaire pour le refroidissement de la plateforme ( 71 ) est formé entre l'arrondi ( 104 ) de la première paroi ( 70 ) de la plateforme et le gradin ( 103 ) de la deuxième paroi ( 69 ) de la plateforme.

3. Aube ( 63 ) de turbine suivant la revendication 1 ou 2, **caractérisée en ce que**
un espace ( 91, 93 ) intermédiaire a une hauteur ( 105 ) constante, définie sensiblement par une hauteur du gradin le long de tout le tracé de la plateforme ( 71 ).

4. Aube ( 63 ) de turbine suivant l'une des revendications 1 à 3,
**caractérisée en ce que** la deuxième paroi ( 69 ) de la plateforme a une épaisseur qui est plus grande qu'une épaisseur de la première paroi ( 70 ) de la plateforme.

5. Aube ( 63 ) de turbine suivant l'une des revendications 1 à 4,
**caractérisée en ce que** la deuxième paroi ( 69 ) de la plateforme a des passages ( 107 ) de refroidissement, un nombre des passages ( 107 ) de refroidissement par surface dans le tracé de la transition ( 65 ) est plus grand que dans une autre partie de la plateforme.

6. Aube ( 63 ) de turbine suivant l'une des revendications 1 à 5,
**caractérisée en ce que** la première paroi ( 70 ) de la plateforme est formée par une partie ( 77, 79 ) en tôle ayant une élasticité de ressort et s'appliquant à la lame ( 67 ) de l'aube.

7. Aube ( 63 ) de turbine suivant l'une des revendications 1 à 6,
**caractérisée en ce que** la plateforme ( 71 ) s'étend qualitativement d'une façon égale des deux côtés de la lame ( 63 ) de l'aube.

8. Turbine ( 1 ) à gaz comprenant un canal ( 5 ) d'écoulement s'étendant le long d'un axe ( 3 ) et ayant une section transversale annulaire pour un fluide ( M ) de travail, un deuxième ( 9, 13 ) gradin d'aube disposé derrière un premier ( 7, 11 ) gradin d'aube le long de l'axe ( 3 ), un gradin ( 7, 9, 11, 13 ) d'aube ayant un certain nombre d'aubes ( 63 ) de turbine suivant l'une des revendications précédentes, disposées annulairement et s'étendant radialement dans le canal ( 5 ) d'écoulement.

9. Turbine ( 1 ) à gaz suivant la revendication 8, **caractérisée en ce que**
lors d'un fonctionnement rotatoire d'une aube ( 63 ) de turbine sous la forme d'une aube ( 23 ) mobile sur un rotor axiale de turbine, il est produit par la rotation une force centrifuge agissant de l'emplanture de la lame de l'aube en direction ( 99 ) de la lame de l'aube,
la partie ( 77, 79 ) en tôle ayant une élasticité de ressort étant repoussée par la force centrifuge sur une butée ( 81, 85 ) et étant ainsi fixée par la force centrifuge.

10. Turbine ( 1 ) à gaz suivant la revendication 8 ou 9, **caractérisée en ce que**
lors du fonctionnement d'une aube ( 63 ) de turbine sous la forme d'une aube ( 21 ) directrice sur un carter ( 15 ) périphérique de turbine, il est produit par un fluide de refroidissement un gradient de pression de l'emplanture de la lame de l'aube dans la direction ( 99 ) de la lame de l'aube, la partie ( 77, 79 ) en tôle ayant une élasticité de ressort étant repoussée par le gradient de pression sur une butée ( 81, 83 ) et étant ainsi fixée par la pression.
